# EUROPEAN PATENT APPLICATION

(11) **EP 1 475 928 A2**
(43) Date of publication of application: **10.11.2004**
(21) Application number: 04101872.2
(22) Date of filing: 30.04.2004
(51) Int. Cl.: H04L 12/56

(54) **Packet network communication method and apparatus**

(30) Priority: 03.05.2003 KR 2003028427
(71) Applicant: Samsung Electronics Co., Ltd., Suwon-si, Gyeonggi-do (KR)
(72) Inventor: An, Cheol-hong, No. 248-806 Ssangyong APT, Suwon-si, Gyeonggi-do (KR)
(74) Representative: Read, Matthew Charles

(57) **Abstract**

A method and apparatus capable of maximizing data throughput by using information on the maximum MAC frame size supported by a physical layer under the existing wireless network environment and by determining the maximum MAC service data unit (MSDU) among network devices. An apparatus of the present invention includes a MAC SAP for providing a service of transmission/reception of data between an upper protocol layer and a MAC layer; a MLME SAP for providing a service of transmission/reception of a packet between the apparatus and another network node; a packetizer module for creating a frame conforming to a MAC frame format by using data received from the upper protocol layer; and a MSDU negotiation module for storing the maximum MSDU size and MAC address of the network node obtained through the management packet and controlling a fragmentation threshold according to the state of a channel.

## Description

The present invention relates to a method of performing communication in a packet data network, the method comprising transmitting data in a packet having a payload portion (MSDU) from a source apparatus to a destination apparatus and a network device having packet data communication means.

In existing network communications, the MAC Layer Frame Size is specified in each standard. This causes a problem in that a MAC frame cannot be efficiently transmitted due to the use of the fixed MAC frame size independent of the maximum size that can be sent by the physical layer.

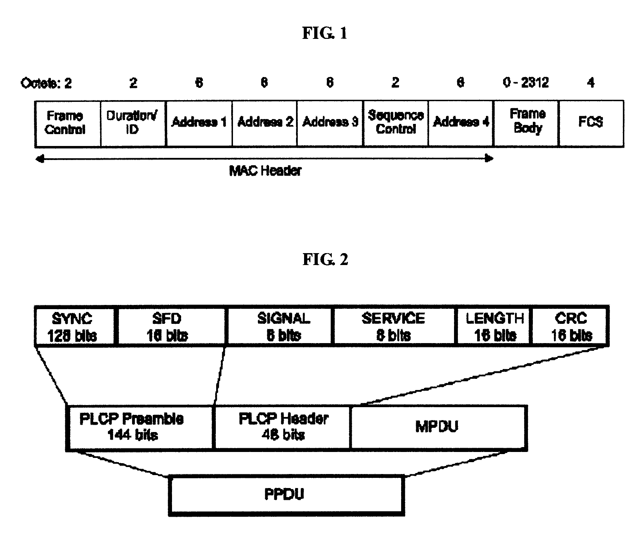

For IEEE 802.11, the maximum MSDU size of a MAC layer frame is fixed at 2304 bytes. As shown in Figure 1, in a frame body, the maximum MSDU size is 2312 bytes, which is the sum of 4 bytes of initialization vector (IV), 2304 bytes of contents and 4 bytes of integrity check value (ICV) and the maximum MAC protocol data unit (MPDU) which is 2336 bytes.

However, it is possible to transmit a MPDU of 4095 bytes in a physical layer that uses a spectrum method. Spectrum spreading methods include direct sequence spread spectrum (DSSS) in which the data signal is XORed with a pseudo-random sequence and frequency hopping in which the carrier frequency is repeatedly changed.

A physical layer using the DSSS method can maximally transmit a MPDU of 8191 bytes. A physical layer using an infrared method can transmit a MPDU of 2500 bytes. Physical layers of IEEE 802.11a and IEEE 802.11b can transmit a MPDU of up to 4095 bytes. In ultra-wide band (UWB), it is possible to transmit a slightly larger MAC frame.

As shown in Figure 2, a MAC frame comprises a PLCP Protocol Data Unit (PPDU) which comprises an MPDU, a physical layer convergence protocol (PLCP) preamble and a PLCP header at PLCP of a physical layer. Thus, the overhead increases and throughput lowered as frame size gets smaller due to the large preamble and header required by the physical layer in each frame, the wide frame space between respective frames and the long channel acquisition time in UWB.

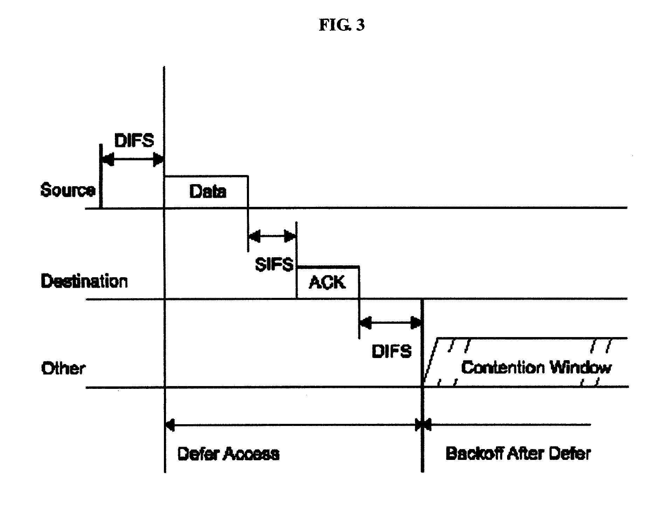

As shown in Figure 3, inter frame spaces (IFSs) are required between transmission of frames and Acknowledgement Code (ACK) packets for each frame may also exist. This prevents the transmission of the largest frame possible, thereby causing throughput to be decreased due to increases in the numbers of unnecessary IFSs and ACK frames, MAC headers, PLCP preambles and PLCP headers.

Digital products such as DVD players, cable STBs, DVCRs, DTVs are frequently used due to the development and spread of digital media. Moreover, under an environment in which such products are connected to wireless networks, audio/video (AV) streams and various data are transmitted within limited wireless network bandwidths. Therefore, there is a need for an improvement of throughput in such wireless environments.

A method, according to the present invention, is characterised by setting a maximum payload portion size as the lesser of the maximum payload portion size supported by the source apparatus and that supported by the destination apparatus, wherein the maximum payload portion size is notified to the source apparatus in a message from the destination apparatus.

A device, according to the present invention, is characterised in that the packet data communication means is configured for setting a maximum payload portion size as the lesser of the maximum payload portion size supported by packet data communication means and that supported by another apparatus and includes means for receiving a maximum payload portion size notification message from another apparatus.

Maximum payload portion size notifications may be received from a plurality of destination apparatuses and stored in association with network addresses, e.g. the MAC addresses, of the associated destination apparatuses.

A request for maximum payload portion size notifications may be broadcast in order to elicit maximum payload portion size notifications from other apparatuses. The request may include a maximum payload portion size notification relating to the requesting apparatus.

The actual maximum payload portion size used for data communication is preferably no greater than the set maximum and less than the maximum, if the received signal quality for signals from the other communicating apparatus is less than a threshold.

Additional preferred and optional features of the present invention are set forth in claims 11 to 21 appended hereto.

An embodiment of the present invention will now be described, by way of example, with reference to the accompanying drawings, in which:
Figure 1 illustrates the structure of an IEEE 802.11 MAC frame;
Figure 2 illustrates the structure of an IEEE 802.11 PLCP frame;
Figure 3 shows the structures of a directed frame, ACK and IFSs of IEEE 802.11;
Figure 4 shows the configuration of a MAC frame in a transmitting apparatus according to the present invention;
Figure 5 shows the configuration of a MAC frame in a receiving apparatus according to the present invention;
Figure 6 is a flowchart illustrating the operation of a transmitting apparatus according to the present invention; and
Figure 7 is a flowchart illustrating the operation of a receiving apparatus according to the present invention.

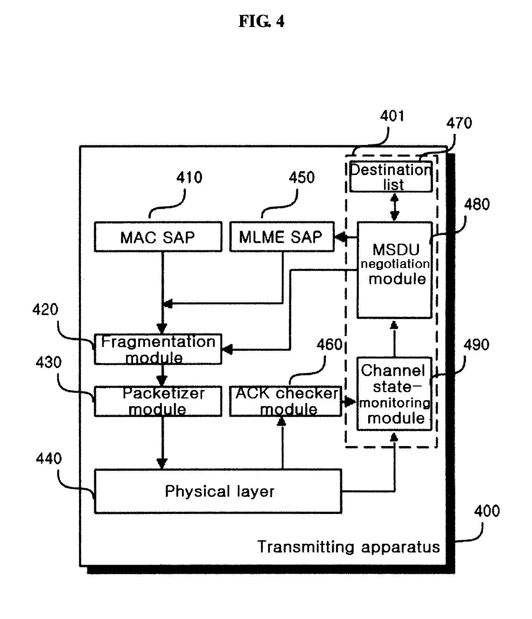

Referring to Figure 4, a transmitting apparatus comprises a MAC SAP 410, a fragmentation module 420, a packetizer module 430, a MLME SAP 450, an ACK checker module 460 and a MAC frame-managing device 401. The MAC frame-managing device 401 comprises a destination list 470, a MSDU negotiation module 480 and a channel state-monitoring module 490.

The MAC SAP 410 provides a service for enabling transmission/reception of data therethrough from an upper protocol layer, i.e. a Logical Link Control (LLC) protocol layer, to the MAC layer. Generally, a SAP (Service Access Point) serves as a path enabling transmission and reception of data to and from the upper protocol layer.

The MLME SAP 450 provides a service enabling the exchange of management packets with other network nodes or devices. In the present invention, the MLME SAP 450 functions to broadcast its own maximum MSDU (MAC Service Data Unit) size using management packets and to receive the maximum MSDU size of another device in a unicast response to a broadcast query. In unicasting, data is addressed to a single node. In broadcasting, data is addressed to all nodes. In multicasting, data is addressed to a predetermined plurality of nodes.

The MSDU negotiation module 480 stores the maximum MSDU size, which has been obtained using the MLME SAP, together with the MAC address of the corresponding network node in the destination list 470 and manages them. It also controls the fragmentation threshold according to the state of the communication channel. If the fragmentation threshold is too high, the speed of communication will be improved but the error rate will increase at the same time. On the other hand, if the fragmentation threshold is too low, the error rate will decrease but the communication speed will also decrease at the same time. Therefore, it is necessary to determine an appropriate value for the fragmentation threshold.

The fragmentation module 420 divides a MAC frame into several frames according to the fragmentation threshold and transmits the divided frames. The packetizer module creates frames that conform to the MAC frame format.

In the case where a frame with an ACK is transmitted in accordance with an ACK policy, the ACK checker module 460 determines success or failure of the transmission of the frame by checking for a received ACK frame. In addition, the ACK checker module provides the determination results to the channel state-monitoring module 490.

The channel state-monitoring module 490 monitors the current state of the channel by comparing the frame failure rate from the ACK checker module 460 with the received signal strength of a packet received in the physical layer.

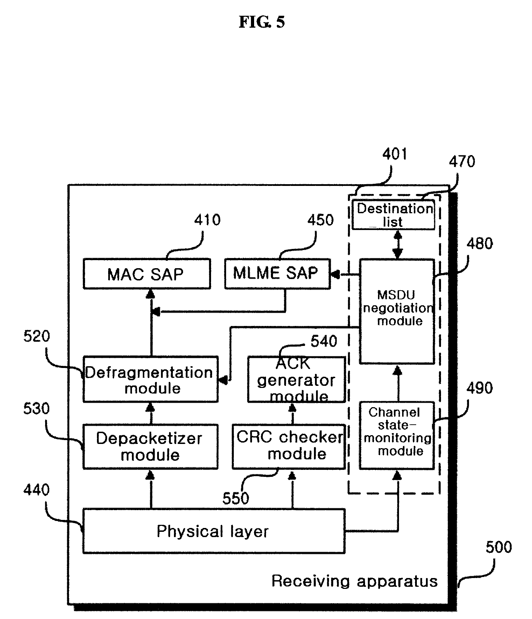

Referring to Figure 5, the receiving apparatus comprises a MAC SAP 410, a depacketizer module 530, a defragmentation module 520, a MLME SAP 450, a Cyclic Redundancy Check (CRC) checker module 550, an ACK generator module 540 and a MAC frame-managing device 401. The elements that are also shown in Figure 4 will not be described again.

The depacketizer module 530 removes the headers created in a MAC Layer. The defragmentation module 520 reassembles the fragmented MAC frames into a single frame and transmits it to the MAC SAP 410. The CRC checker module 550 checks the CRC of received MAC frames to determine whether there are any errors and provides the determination results to the ACK generator module 540. The ACK generator module 540 transmits ACK frames based on the CRC check results according to the ACK policy.

When the MSDU negotiation module 480 receives a management packet carrying maximum MSDU size information, it stores the MAC address and maximum MSDU size of the sending network node in the destination list and replies with its own maximum MSDU size using a management packet.

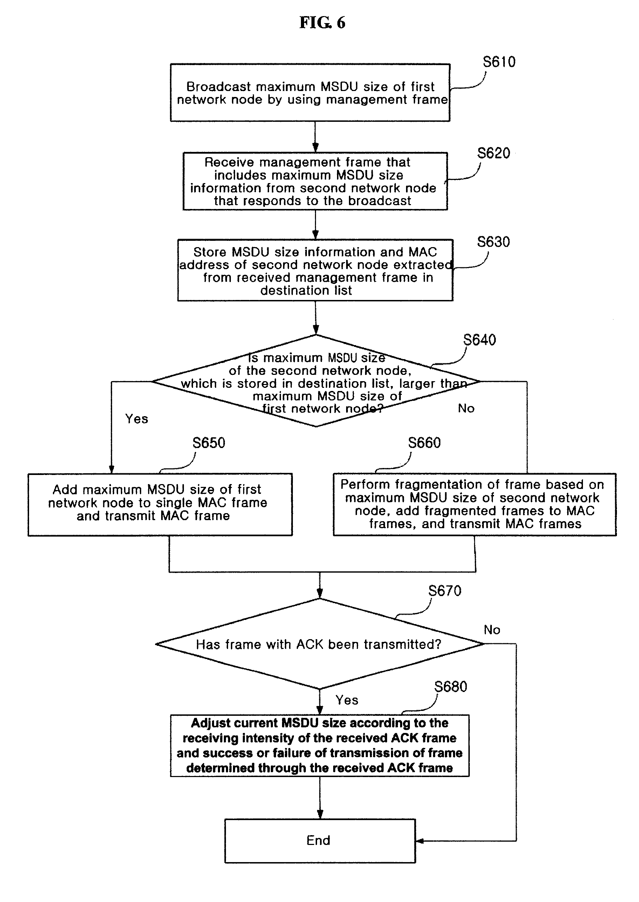

Referring to Figure 6, a first network node (sending part node) broadcasts its own maximum MSDU size using a management frame from the MSDU negotiation module to other network nodes present in the wireless network (S610). A plurality of second network nodes (receiving part nodes) receive the broadcast frame and stores the MSDU size and MAC address of the first network node in their destination lists and transmits information about their own maximum MSDU sizes back to the first network node by using respective unicast management response frames (S620). The first network node extracts the maximum MSDU size information and MAC addresses of second network nodes from the management response frames and stores them in its destination list (S630). The first network node does not receive any management response frames from second network nodes that do not support the functions of the present invention. In such a case, the MSDU size will be that set by the specification of each device.

As for the maximum MSDU size of data to be transmitted in the case where the first network node transmits data through a MAC SAP, the first network node determines the MTU (Maximum Transmit Unit) as the value supported by its physical layer and then compares its own maximum MSDU size with the maximum MSDU size of a second network node, present in the destination list, by referring to the destination address (S640). If the maximum MSDU size of the second network node is larger than or equal to the maximum MSDU size of the first network node, the first network node adds its own maximum MSDU to a single frame and transmits the frame (S650). However, if the maximum MSDU size of the second network node is smaller than the maximum MSDU size of the first network node, the first network node performs frame fragmentation based on the maximum MSDU size of the second network node and transmits the fragmented frames (S660). The receiving part will receive frames up to the maximum size that can be received by the receiving part. If the received frame comprises fragmented frames, the fragmented frames will be reassembled and then sent to an upper layer.

In the case of transmitting a frame including an ACK according to an ACK policy, the success or failure of the transmission of the frame will be determined by referring to the received ACK frame (S670). It is possible to adjust the current MSDU size for the second network node according to the determination results and the received signal strength of the received ACK frame (S680). Therefore, the destination list stores the MAC address, maximum MSDU size and current MSDU of a destination network node. The current MSDU initially has the maximum MSDU size. Fragmentation will be selected based on the current MSDU of the second network node, MSDU of the first network node and the minimum value of fragmentation threshold management information base (MIB). Here, MIB refers to a formal description of a series of network objects that can be managed using Simple Network Management Protocol (SNMP) (protocol for managing a network, and monitoring and controlling network devices and their operations).

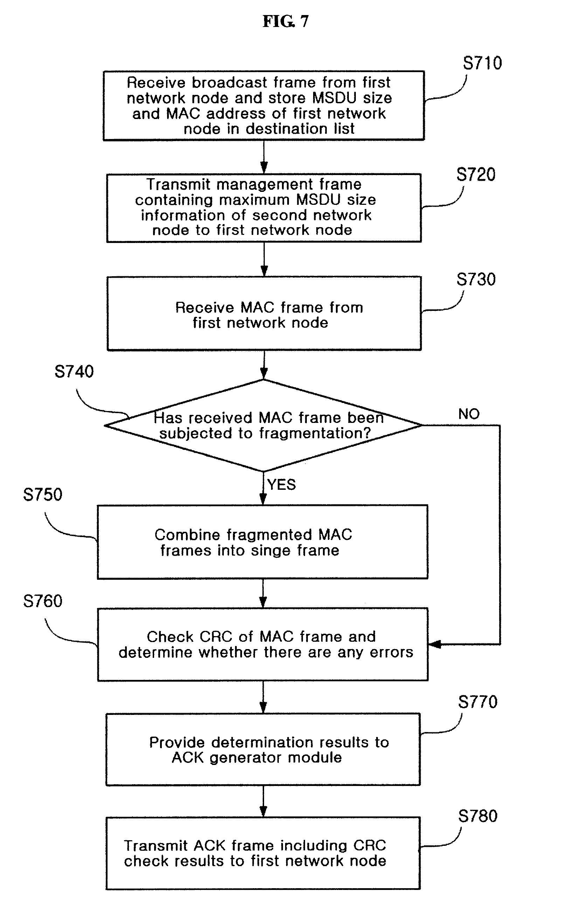

Referring to Figure 7, a second network node receives the broadcast frame from the first network node and stores the maximum MSDU size and MAC address of the first network node in the destination list (S710). Then, the second network node transmits a management frame including information on its own maximum MSDU size to the first network node (S720). As described in reference to S640, S650 and S660 of Figure 6, the first network node having received the frame transmits a frame appropriate in size depending upon result of comparison in size of its own MSDU with the maximum MSDU of the second network node, and the second network node will then receive the frame (S730). If the second network node receives the fragmented frames, it combines the fragmented frames into a single frame in the defragmentation module (S740, S750). On the other hand, if the received frame comprises no fragmented frames, there is no need for defragmentation thereof because the received frame is itself a single complete frame. In the next step, it is determined whether there are any errors by checking the CRC of the MAC frame (S760). The determination results are provided to the ACK generator module (S770) and an ACK frame including the CRC check results is transmitted to the first network node (S780).

The MAC header, the PLCP preamble, the PCLP header, the IFS (inter frame space between frames) and the ACK frame are required to transmit a single MAC frame. Therefore, in case of transmitting the MAC frame, it is more effective to transmit the MAC frame of maximum size even though the same data are transmitted. Further, in case of transmitting fragmented data, the number of fragments can be reduced and thus the respective headers, ACK and IFS can also be reduced. Therefore, there is an advantage in that throughput can be further increased.

## Claims

1. A method of performing communication in a packet data network, the method comprising transmitting data in a packet having a payload portion (MSDU) from a source apparatus to a destination apparatus and being **characterised by** setting a maximum payload portion size as the lesser of the maximum payload portion size supported by the source apparatus and that supported by the destination apparatus, wherein the maximum payload portion size is notified to the source apparatus in a message from the destination apparatus.

2. A method according to claim 1, including receiving, at the source apparatus, maximum payload portion size notifications from a plurality of destination apparatuses and storing the notified maximum payload portion sizes in association with network addresses of the associated destination apparatuses.

3. A method according to claim 1 or 2, including broadcasting a request for maximum payload portion size notifications from the source apparatus.

4. A method according to claim 3, wherein said request includes a maximum payload portion size notification relating to the source apparatus.

5. A method according to any preceding claim, wherein the actual maximum payload portion size used by the source apparatus is no greater than the set maximum and less than the maximum if the received signal quality for signals from the destination apparatus is less than a threshold.

6. A network device having packet data communication means **characterised in that** the packet data communication means is configured for setting a maximum payload portion size as the lesser of the maximum payload portion size supported by packet data communication means and that supported by another apparatus and includes means for receiving a maximum payload portion size notification message from another apparatus.

7. A device according to claim 6, wherein the packet data communication means is configured for receiving maximum payload portion size notifications from a plurality of destination apparatuses and storing the notified maximum payload portion sizes in association with network addresses of the associated apparatus.

8. A device according to claim 6 or 7, wherein the packet data communication means is configured for broadcasting a request for maximum payload portion size notifications.

9. A device according to claim 8, wherein said request includes a maximum payload portion size notification relating to the source apparatus.

10. A device according to any one of claims 6 to 9, wherein the packet data communication means includes received signal quality determining means and is configured such that the actual maximum payload portion size used is no greater than the maximum set in respect of the other apparatus to be communicated with and less than the maximum, if the received signal quality for signals from the other apparatus is less than a threshold.

11. A Media Access Control (MAC) frame managing method comprising:
storing a maximum MAC Service Data Unit (MSDU) size and a destination MAC address of a network node obtained through a management packet;
comparing a failure rate of a frame transmitted to the network node with a signal strength of a packet received by a physical layer to output a result; and
controlling a MAC frame size by adjusting a fragmentation threshold value according to a state of a transmitting/receiving channel determined by the result.

12. A wireless-compatible MAC frame transmitting apparatus, comprising:
a Media Access Control (MAC) Service Access Point (SAP) for providing a service of transmission/reception of data between an upper protocol layer and a MAC layer;
a MAC Layer Management Entity (MLME) SAP for providing a service of transmission/reception of a packet between the apparatus and a network node; a packetizer module for creating a MAC frame conforming to a MAC frame format by using data received from the upper protocol layer; and
a MAC Service Data Unit (MSDU) negotiation module for storing a maximum MSDU size and a MAC address of the network node obtained through the management packet and controlling a fragmentation threshold according to a state of a channel.

13. The apparatus as claimed in claim 12, further comprising a fragmentation module for dividing the MAC frame into a plurality of frames according to the fragmentation threshold and transmitting the plurality of frames.

14. The apparatus as claimed in claim 12, further comprising:
an Acknowledgement Code (ACK) checker module for, upon transmission of the first frame as a transmitted frame, with an ACK, determining success or failure of the transmission of the first frame based on a received ACK frame; and
a channel state-monitoring module for monitoring a current state of a channel by comparing a failure rate of the transmitted frame with a receiving signal strength of a packet received by a physical layer.

15. A wireless-compatible Media Access Control (MAC) frame receiving apparatus, comprising:
a depacketizer module for removing a header created in a MAC layer; a MAC Service Access Point (SAP) for providing a service of transmission/reception of data between an upper protocol layer and the MAC layer;
a MAC Layer Management Entity (MLME) SAP for providing a service of transmission/reception of a packet between the apparatus and a network node; and
a MAC Service Data Unit (MSDU) negotiation module for determining a first MSDU size of the network node through a received management packet and transmitting information on a second MSDU size of the MAC frame receiving apparatus by using a transmitted management packet.

16. The apparatus as claimed in claim 15, further comprising:
a Cyclic Redundancy Check (CRC) checker module for checking a MAC frame received from the network node to determine whether there are any errors and generating determination results; and
an ACK generator module for receiving the determination results and creating an ACK frame.

17. The apparatus as claimed in claim 15, further comprising a defragmentation module for combining fragmented MAC frames into a single frame and transmitting the single frame to the MAC SAP.

18. A wireless-compatible Media Access Control (MAC) frame transmitting method, comprising:
broadcasting a first maximum MAC Service Data Unit (MSDU) size of a transmitting node by using a first management frame in a broadcast;
receiving a second management frame containing information on a second maximum MSDU size from a network node that responds to the broadcast;
extracting a MAC address and the second maximum MSDU size information of the network node from the second management frame and storing the MAC address and the second maximum MSDU size information of the network node in a destination list;
comparing the first maximum MSDU size of the transmitting node with the second maximum MSDU size of the network node stored in the destination list and determining which of the first and second maximum MSDU sizes is larger to output a determination result; and
transmitting a MAC frame according to the determination result, in a transmission.

19. The method as claimed in claim 18, wherein the transmitting the MAC frame comprises:
adding the first maximum MSDU of the transmitting node to a single MAC frame and transmitting the single MAC frame, if the second maximum MSDU size of the network node is larger than the first maximum MSDU of the transmitting node;
fragmenting a frame into fragmented frames based on the second maximum MSDU size of the network node, adding each of the fragmented frames to a respective one of a plurality of MAC frames and transmitting the plurality of MAC frames, if the second maximum MSDU size of the network node is smaller than the first maximum MSDU of the transmitting node.

20. The method as claimed in claim 18, further comprising the step of:
adjusting the current MSDU size according to a receiving signal strength of a received ACK frame and a success or a failure of the transmission of the MAC frame determined through the received ACK frame, if the MAC frame includes an ACK frame.

21. A Media Access Control (MAC) frame managing apparatus comprising:
means for storing a maximum MAC Service Data Unit (MSDU) size and a destination MAC address of a network node obtained through a management packet;
means for comparing a failure rate of a frame transmitted to the network node with a signal strength of a packet received by a physical layer to output a result; and
means for controlling a MAC frame size by adjusting a fragmentation threshold value according to a state of a transmitting/receiving channel determined by the result.
